# EUROPÄISCHE PATENTSCHRIFT

(11) **EP 0 807 544 B1**
(45) Veröffentlichungstag und Bekanntmachung des Hinweises auf die Patenterteilung: **09.04.2003**
(21) Anmeldenummer: 97107913.2
(22) Anmeldetag: 15.05.1997
(51) Int. Cl.: B60H 1/00, B60H 3/00

(54) **Schaltungsanordnung zur schadstoffgesteuerten Belüftung einer Fahrzeugkabine**
Pollution controlled ventilation of a vehicle cabin
Ventilation d'une cabine de véhicule contrôlée par le niveau de la pollution

(30) Priorität: 15.05.1996 DE 19619553
(43) Veröffentlichungstag der Anmeldung: 19.11.1997
(60) Teilanmeldung: 02015967.9
(73) Patentinhaber: paragon AG, 33129 Delbrück (DE)
(72) Erfinder: Frers, Klaus Dieter, 33129 Delbrück/Paderborn (DE); Rump, Hanns, 59427 Unna (DE)
(74) Vertreter: Lelgemann, Karl-Heinz, Dipl.-Ing.

(56) Entgegenhaltungen:
- WO-A-95/29072
- DE-A- 3 537 818
- DE-A- 4 217 393
- DE-C- 19 509 495

## Beschreibung

Die Erfindung bezieht sich auf eine Schaltungsanordnung zur schadstoffgesteuerten Belüftung einer Fahrzeugkabine nach dem Oberbegriff des Patentanspruchs 1.

Aus der DE 35 37 818 C2 ist eine Schaltungsanordnung bekannt, die dazu dient, bei sehr niedrigen Temperaturen, insbesondere bei Temperaturen von kleiner als 0 Grad C, ein Beschlagen der Fenster zu vermeiden; ein derartiges Beschlagen der Fenster würde auftreten, da im Umluftbetrieb zwangsläufig die relative Feuchte der Fahrzeugkabinenluft ansteigen würde. Zur Vermeidung des Beschlagens der Fenster weist die bekannte Schaltungsanordnung den Temperatursensor auf, dessen Ausgangssignale an die Umstelleinrichtung angelegt werden. Mittels der Umstelleinrichtung wird die Schaltungsanordnung so geschaltet, daß sie unterhalb einer vorgegebenen Temperatur der Außenluft, unabhängig vom Schadstoffgehalt der Außenluft, die Belüftung auf Außenluftbetrieb stellt.

Sofern diejenige Temperatur, ab der zwangsweise der Außenluftbetrieb herrscht, vergleichsweise hoch ist, können diejenigen vorteilhaften Wirkungen, die mit einer schadstoffgesteuerten Belüftung der Fahrzeugkabine einhergehen, bereits relativ häufig nicht mehr erzielt werden. Sofern diese Temperatur vergleichsweise niedrig angesetzt wird, kann nicht ausgeschlossen werden, daß sich in einem oberhalb dieser Temperatur befindlichen vergleichsweise großen Temperaturbereich ein Beschlagen der Fenster ergibt, mit den damit einhergehenden Sicherheitseinbußen.

Die W0 95 29 072A zeigt eine Schaltungsanordnung zur schadstoffgesteuerten Belüftung einer Fahrzeugkabine mit Umschaltung auf Umluftbetrieb mittels Erfassung der äußeren Schadstoffbelastung, mit einem Schadstoffsensor zur Erfassung des Schadstoffgehalts der Außenluft, einem Temperatursensor zur Erfassung der Temperatur der Außenluft, und einer Umstelleinrichtung, mittels der die Belüftung der Fahrzeugkabine in Abhängigkeit von Ausgangssignalen vom Schadstoffsensor und vom Temperatursensor vom Außenluft- auf den Umluftbetrieb und umgekehrt umstellbar ist. Die Ansprechempfindlichkeit der Umstelleinrichtung auf Ausgangssignale des Schadstoffsensors wird vom Temperatursensor zur Erfassung der Temperatur der Außenluft insoweit beeinflußt, als die seitens dieses Temperatursensors erfaßte Temperatur der Außenluft mit der Temperatur innerhalb der Fahrzeugkabine verglichen wird. Die Ansprechempfindlichkeit der Umstelleinrichtung wird erhöht, wenn die Temperatur der Außenluft größer als die Temperatur der Luft innerhalb der Fahrzeugkabine ist, wohingegen die Anspruchempfindlichkeit der Umstelleinrichtung verringert wird, wenn die Temperatur der Außenluft kleiner ist als die Temperatur der Luft innerhalb der Fahrzeugkabine.

Der Erfindung liegt die Aufgabe zugrunde, eine Schaltungsanordnung zur schadstoffgesteuerten Belüftung einer Fahrzeugkabine mit Umschaltung auf Umluftbetrieb mittels Erfassung der äußeren Schadstoffbelastung zu schaften, bei der für unterschiedliche Temperaturbereiche der Außenluft unter Vermeidung des Beschlagens der Scheiben jeweils eine die Schadstoffbelastung der Außenluft optimal berücksichtigende Ansprechempfindlichkeit der Umstelleinrichtung auf Ausgangssignale des Schadstoffsensors erreichbar ist.

Diese Aufgabe wird erfindungsgemäß durch die Merkmale des kennzeichneden Teils des Patentanspruchs 1 gelöst. Durch die erfindungsgemäße Reduzierung der Ansprechempfindlichkeit wird, wenn auch bei einem höheren Schadstoffgehalt der Außenluft, auch bei niedrigen Temperaturen der Außenluft nach wie vor eine Umstellung auf den Umluftbetrieb erreicht. Dadurch können diejenigen Vorteile, die mit einer schadstoffgesteuerten Belüftung der Fahrzeugkabine einhergehen, zumindest teilweise weiter erzielt werden. Je niedriger die Temperatur der Außenluft unterhalb der ersten Temperatur T1 ist, desto niedriger wird derjenige Zeitanteil, in dem die Belüftung im Umluftbetrieb betrieben wird, bis unterhalb der zweiten niedrigeren Temperatur T2 kein umluftbetrieb mehr erfolgt. Dadurch kann ein Beschlagen der Scheiben der Fahrzeugkabine sicher verhindert werden, wobei dennoch die Qualität der Raumluft in der Fahrzeugkabine besser ist als im reinen Außenluftbetrieb der Belüftung.

Mit dem Erreichen bestimmter Temperaturen der Außenluft wird somit bei eigentlich den Umluftbetrieb der Belüftung verursachendem vergleichsweise hohen Schadstoffgehalt der Außenluft der Zeitanteil, in dem die Belüftung tatsächlich im Umluftbetrieb betrieben wird, allmählich reduziert bis der Umluftbetrieb ganz eingestellt wird.

Bei solchen Temperaturen, bei denen ein Beschlagen der Scheiben nicht befürchtet werden muß, wird die Belüftung bei einer zu hohen Anreicherung von Schadstoffen in der Außenluft kontinuierlich im Umluftbetrieb betrieben. Es sei darauf hingewiesen, daß selbstverständlich nach einer bestimmten Zeitdauer eine Umschaltung auf den Außenluftbetrieb erfolgen muß, um sicherzustellen, daß der Sauerstoffgehalt der Raumluft in der Fahrzeugkabine nicht zu niedrig wird. Unterhalb der niedrigen Temperatur wird die Belüftung auch bei zu hohem Schadstoffgehalt der Außenluft ständig im Außenluftbetrieb betrieben, da ansonsten aufgrund von Beschlagen der Fenster der Fahrzeugkabine unzulässige Sicherheitseinbußen aufträten, die durch den Komfort- und Bequemlichkeitsgewinn vergleichweise sauberer Raumluft in der Fahrzeugkabine nicht aufgewogen werden. Zwischen der ersten, vergleichsweise hohen Temperatur und der zweiten, vergleichsweise niedrigen Temperatur, nimmt derjenige Zeitanteil, während dem die Belüftung im Umluftbetrieb betrieben wird, kontinuierlich ab. So wird, solange irgendmöglich, die vorteilhafte Wirkung der schadstoffgesteuerten Belüftung erhalten, wohingegen ein Beschlagen der Fenster der Fahrzeugkabine sicher ausgeschlossen wird.

Als besonders vorteilhaft hat es sich erwiesen, wenn die erste, vergleichsweise hohe Temperatur T1 gemäß Patentanspruch 2 10 Grad C, die zweite, vergleichsweise niedrige Temperatur T2 minus 5 Grad C, Delta T 0,3 Grad C und der vorgegebene Prozentsatz, um den der Zeitanteil des Umluftbetriebs abnimmt, 2 % betragen.

Erfindungsgemäße schadstoffgesteuerte Belüftungsverfahren ergeben sich aus den Patentansprüchen 3 und 4.

Bei einer Ausführungsform der erfindungsgemäßen Schaltungsanordnung wirkt ein Temperatursensor auf ein Komparatornetzwerk ein, wobei die Ausgänge dieses Komparatornetzwerkes auf eine Logikeinheit einwirken, die innerhalb einer zentralen Signalauswertung vorgesehen ist.

Es ist auch möglich, einen NTC-Widerstand als Bestandteil einer Schwingungsschaltung vorzusehen und deren temperaturabhängige Frequenz unmittelbar der Signalauswertung zuzuführen, die hieraus die Temperatur NTC-Widerstandes ermittelt. Eine Regel zur Umschaltung einer Umstelleinrichtung, mittels der die Belüftung der Fahrzeugkabine in Abhängigkeit von Ausgangssignalen von einem Schadstoffsensor und vom Temperatursensor vom Außenluft- auf den Umluftbetrieb und umgekehrt umstellbar ist, kann wie folgt vorgegeben werden:

Sofern die Temperatur der Außenluft größer als 10 Grad C ist, bleibt ein Verhältnis zwischen Umluft- und Außenluftbetrieb, welches vorgegeben ist, konstant. Dieses Verhältnis kann beispielsweise 1,0 betragen. Hierbei ist jedoch darauf hinzuweisen, daß, um sicherzustellen, daß stets ein ausreichender Sauerstoffgehalt in der Raumluft der Fahrzeugkabine vorliegt, nach Ablauf eines bestimmten Zeitraums stets, zumindests kurzzeitig, vom Umluft- auf den Zu- bzw. Außenluftbetrieb umgestellt wird.

Unterhalb einer Temperatur der Außenluft von minus 5 Grad C wird die Belüftung stets auf Außenluftbetrieb eingestellt, da ansonsten ein Beschlagen der Fenster der Fahrzeugkabine nicht ausgeschlossen werden kann, was mit unzulässigen Sicherheitseinbußen einhergehen würde. Im Bereich zwischen 10 Grad C und minus 5 Grad C kann sich beispielsweise das Verhältnis Umluftbetrieb zu Zuluftbetrieb bei einem Temperaturabfall von jeweils 0,3 Grad C um den vorgegebenen Prozentsatz von 2 % reduzieren.

Je nach klimatischen Verhältnissen sind auch andere Ausgestaltungen dieser vorstehend erläuterten Regel möglich.

Es ist auch möglich, die vorliegende Erfindung analogtechnisch auszugestalten. Hierbei wird ein temperaturabhängiger Widerstand mit negativem Temperaturkoeffizienten so in eine Verstärkerschaltung eingeführt, daß sich bei abnehmenden Temperaturen eine entsprechend abnehmende Ausgangsamplitude ergibt.

Außer in Kraftfahrzeugen kann die vorliegende Erfindung auch zur Belüftung anderer Kabinen eingesetzt werden.

## Patentansprüche

1. Schaltungsanordnung zur schadstoffgesteuerten Belüftung einer Fahrzeugkabine mit Umschaltung auf Umluftbetrieb mittels Erfassung der äußeren Schadstoffbelastung, mit einem Schadstoffsensor zur Erfassung des Schadstoffgehalts der Außenluft, einem Temperatursensor zur Erfassung der Temperatur der Außenluft, und einer Umstelleinrichtung, mittels der die Belüftung der Fahrzeugkabine in Abhängigkeit von Ausgangssignalen vom Schadstoffsensor und vom Temperatursensor vom Außenluft- auf den Umluftbetrieb und umgekehrt umstellbar ist, wobei die Ansprechempfindlichkeit der Umstelleinrichtung auf Ausgangssignale des Schadstoffsensors vom Temperatursensor beeinflußt wird, so daß die Ansprechempfindlichkeit der Umstelleinrichtung auf Ausgangssignale des Schadstoffsensors mit abnehmender Temperatur der Außenluft reduziert wird, **dadurch gekennzeichnet, dass** bestimmten Bereichen der Temperatur der Außenluft bestimmte Schließ-/Öffnungszeitverhältnisse der Umstelleinrichtung so zugeordnet sind, dass sich bei abnehmender Temperatur der Außenluft das Schließ-/Öffnungszeitverhältnis der Umstelleinrichtung verkleinert, wobei das Schließ-/Öffnungszeitverhältnis der Umstelleinrichtung oberhalb einer ersten Temperatur T1 konstant ist, zwischen der ersten Temperatur T1 und einer niedrïgeren zweiten Temperatur T2 je Delta T um einen vorgegebenen Prozentsatz abnimmt und unterhalb der zweiten niedrigeren Temperatur T2 den Wert 0 annimmt.

2. Schaltungsanordnung nach Anspruch 1, bei der die erste Temperatur T1 gleich 10 Grad C, die zweite Temperatur T2 gleich minus 5 Grad C, Delta T gleich 0,3 Grad C und der vorgegebene Prozentsatz 2 % beträgt.

3. Schadstoffgesteuertes Belüftungsverfahren für eine Fahrzeugkabine, bei dem die Schadstoffbelastung der Außenluft erfaßt wird, die Belüftung der Fahrzeugkabine in Abhängigkeit vom Niveau der Schadstoffbelastung und der Temperatur der Außenluft im Außenluft- oder im Umluftbetrieb erfolgt, mit abnehmender Temperatur der Außenluft die Ansprechempfindlichkeit des Schadstoffsensors reduziert wird, **dadurch gekennzeichnet, dass** bei konstanter Schadstoffbelastung der Außenluft mit abnehmerder Temperatur der Außenluft das Verhältnis zwischen Umluftbetrieb und Außenluftbetrieb entsprechend der abnehmenden Temperatur der Außenluft verkleinert wird, wobei der Zeitanteil des Umluftbetriebs oberhalb einer ersten Temperatur T1 konstant ist, zwischen der ersten Temperatur T1 und einer zweiten, niedrigeren Temperatur T2 je Delta T um einen vorgegebenen Prozentsatz reduziert wird und unterhalb der zweiten niedrigeren Temperatur T2 gleich 0 wird.

4. Schadstoffgesteuertes Belüftungsverfahren nach Anspruch 3, bei dem die erste Temperatur T1 auf 10 Grad C, die zweite Temperatur T2 auf minus 5 Grad C, Delta T auf 0,3 Grad C und der vorgegebene Prozentsatz auf 2 % eingestellt werden.

## Claims

1. Circuit arrangement for the pollutant-controlled venting of a vehicle cabin with switching to re-circulation operation by means of detection of the external pollution burden, having a pollutant sensor for detecting the pollutant content of the external air, a temperature sensor for detecting the temperature of the external air, and a switching device, by means of which the venting of the vehicle cabin can be switched from external air operation to re-circulation operation, and vice versa, dependent on output signals from the pollutant sensor and the temperature sensor, the response sensitivity of the switching device relative to output signals of the pollutant sensor being influenced by the temperature sensor so that the response sensitivity of the switching device relative to output signals of the pollutant sensor is reduced as the temperature of the external air decreases, **characterised in that** specific closing/opening time ratios of the switching device are associated with specific ranges of the temperature of the external air in such a manner that the closing/opening time ratio of the switching device diminishes as the temperature of the external air decreases, the closing/opening time ratio of the switching device being constant above a first temperature T1, decreasing by a predetermined percentage per delta T between the first temperature T1 and a lower second temperature T2, and assuming the value 0 below the second lower temperature T2.

2. Circuit arrangement according to claim 1, wherein the first temperature T1 equals 10 degrees Celsius, the second temperature T2 equals minus 5 degrees Celsius, delta T is equal to 0.3 degrees Celsius and the predetermined percentage is 2%.

3. Pollutant-controlled venting method for a vehicle cabin, wherein the pollution burden of the external air is detected, the venting of the vehicle cabin is effected in accordance with external air operation or re-circulation operation dependent on the level of the pollution burden and the temperature of the external air, and the response sensitivity of the pollutant sensor is reduced as the temperature of the external air decreases, **characterised in that**, if the pollution burden of the external air remains constant and the temperature of the external air decreases, the ratio between re-circulation operation and external air operation is reduced according to the decreasing temperature of the external air, the time portion of the re-circulation operation being constant above a first temperature T1, being reduced by a predetermined percentage per delta T between the first temperature T1 and a second lower temperature T2 and being equal to 0 below the second lower temperature T2.

4. Pollutant-controlled venting method according to claim 3, wherein the first temperature T1 is set to 10 degrees Celsius, the second temperature T2 is set to minus 5 degrees Celsius, delta T is set to 0.3 degrees Celsius and the predetermined percentage is set to 2%.

## Revendications

1. Agencement de circuit pour la ventilation d'une cabine de véhicule contrôlée en fonction de la pollution, avec une commutation en mode de recyclage d'air par mesure du degré de pollution extérieure, avec un détecteur de pollution pour mesurer la teneur en substances polluantes de l'air extérieur, avec un détecteur de température pour mesurer la température de l'air extérieur et avec un dispositif de commutation à l'aide duquel la ventilation de la cabine de véhicule, en fonction de signaux de sortie des détecteurs de pollution et de température, peut être commutée du mode de circulation d'air extérieur en mode de recyclage d'air, la sensibilité de réaction du dispositif de commutation aux signaux de sortie du détecteur de pollution étant influencée par le détecteur de température de telle sorte que ladite sensibilité de réaction du dispositif de commutation aux signaux de sortie du détecteur de pollution diminue lorsque la température diminue, **caractérisé en ce qu'**à des plages déterminées de la température de l'air extérieur sont associés des rapports déterminés durée de fermeture/durée d'ouverture du dispositif de commutation, le rapport durée de fermeture/durée d'ouverture du dispositif de commutation étant constant au-dessus d'une première température T1, décroissant d'un pourcentage prédéterminé pour chaque Delta T entre la première température T1 et la deuxième température T2 plus basse et prenant la valeur 0 au-dessous de la deuxième température T2 plus basse.

2. Agencement de circuit selon la revendication 1, dans lequel la première température T1 est égale à 10 °C, la deuxième température T2 est égale à moins 5 °C, Delta T est égal à 0,3 °C et le pourcentage prédéterminé est égal à 2%.

3. Procédé pour la ventilation d'une cabine de véhicule contrôlée en fonction de la pollution, dans lequel on mesure le degré de pollution de l'air extérieur, on commute la ventilation de la cabine de véhicule en mode de circulation d'air extérieur ou en mode de recyclage d'air en fonction du niveau de pollution et en fonction de la température, et dans lequel on diminue la sensibilité de réaction du détecteur de pollution au fur et à mesure que la température de l'air extérieur diminue, **caractérisé en ce que**, la pollution de l'air extérieur étant constante, lorsque la température de l'air extérieur diminue, on réduit le rapport entre fonctionnement en mode de recyclage d'air et fonctionnement en mode de circulation d'air extérieur conformément à la diminution de température de l'air extérieur, la durée de fonctionnement en mode à circulation d'air extérieur étant constante au-dessus d'une première température T1, diminuant d'un pourcentage déterminé pour chaque Delta T entre la première température T1 et une deuxième température T2 plus basse et étant égale à 0 au-dessous de la deuxième température T2 plus basse.

4. Procédé de ventilation contrôlée en fonction de la pollution selon la revendication 3, dans lequel la première température T1 est réglée à 10 °C, la deuxième température T2 à moins 5 °C, Delta T à 0.3 °C et le pourcentage prédéterminé à 2%.
